# EUROPEAN PATENT APPLICATION

(11) **EP 4 435 305 A1**
(43) Date of publication of application: **25.09.2024**
(21) Application number: 22894981.4
(22) Date of filing: 19.11.2022
(51) Int. Cl.: F16L 1/00, F16L 13/02

(54) **PIPELINE CONNECTING STRUCTURE AND STOP VALVE**

(30) Priority: 22.11.2021 CN 202122892491 U; 30.06.2022 CN 202221673170 U
(71) Applicant: Zhejiang Dunan Artificial Environment Co., Ltd., Shaoxing Zhejiang 311835 (CN)
(72) Inventor: ZHOU, Feng, Shaoxing, Zhejiang 311835 (CN); LOU, Feng, Shaoxing, Zhejiang 311835 (CN); CHEN, Diyong, Shaoxing, Zhejiang 311835 (CN); FENG, Guanghua, Shaoxing, Zhejiang 311835 (CN); WANG, Bin, Shaoxing, Zhejiang 311835 (CN)
(74) Representative: Meyer-Dulheuer MD Legal Patentanwälte PartG mbB
(86) International application number: PCT/CN2022/133042
(87) International publication number: WO 2023/088452

(57) **Abstract**

A pipeline connecting structure (100) and a stop valve (1000) are provided. The pipeline connecting structure (100) includes a connecting pipe body (10). A solder blocking portion (111) is provided on the connecting pipe body (10), and can block a solder from flowing on an inner wall (101) of the connecting pipe body (10), so as to limit the solder to flow out of an end of the connecting pipe body (10) along a flow direction of the solder.

## Description

### CROSS-REFERENCE TO RELATED APPLICATIONS

This application claims priority to Chinese patent application Nos. 202122892491.3, filed on November 22, 2021, and titled "PIPELINE CONNECTING STRUCTURE AND STOP VALVE"; 202221673170.2, filed on June 30, 2022, and titled "PIPELINE CONNECTING STRUCTURE AND STOP VALVE". The contents of the above identified application are hereby incorporated herein in their entireties by reference.

### TECHNICAL FIELD

The present invention relates to the field of pipeline welding technology, and in particular, to a pipeline connecting structure and a stop valve.

### BACKGROUND

A connecting pipe is a common media circulation carrier. The connecting pipe is used in a system pipeline, and the connecting pipe is usually connected and in communication with an external pipeline or an equipment cavity by welding.

However, the connecting pipe in the related art is applied to a system pipeline of equipment. In a process of welding two adjacent pipelines in the system pipeline, when a solder used for welding melts and the two pipelines are welded and fixed, excessive solder will permeate along an inner wall of the connecting pipe and form an internal flow welding, which will enter the equipment cavity through the connecting pipe in more serious cases, which will not only affect assembly of other parts in the equipment, but also cause welding chips to fall off in subsequent use.

### SUMMARY

According to various embodiments of the present invention, a pipeline connecting structure and a stop valve are provided.

The present invention provides a pipeline connecting structure. The pipeline connecting structure includes a connecting pipe body, the connecting pipe body is provided with a solder blocking portion. The solder blocking portion is capable of blocking a solder from flowing on an inner wall of the connecting pipe body, to limit the solder from flowing out from an end of the connecting pipe body along a flow direction of the solder.

In some embodiments, the number of the solder blocking portions is multiple, and a plurality of solder blocking portions are arranged at intervals.

In some embodiments, the solder blocking portion includes a first solder blocking portion and a second solder blocking portion. The first solder blocking portion is disposed on an inner wall of the connecting pipe body. The second solder blocking portion is disposed on an end of the connecting pipe body. A distance between the first solder blocking port and the second solder blocking port is defined as *a*, and the distance *a* between the first solder blocking portion and the second solder blocking portion satisfies following formula: 0.5 mm ≤ *a* ≤ 5 mm.

In some embodiments, the solder blocking portion is defined by a part of the inner wall of the connecting pipe body protruding in a direction of a center line of the connecting pipe body. In some embodiments, a first blocking section is defined by a part of the connecting pipe body being bent inward along the flow direction of the solder, and the solder blocking portion is a part of the inner wall of the connecting pipe body where the first blocking section is located.

In some embodiments, a groove is defined on an outer edge of an end of the connecting pipe body in a direction opposite to the flow direction of the solder, and when the connecting pipe body is inserted into an external pipeline, the groove of the connecting pipe body is capable of fitting with the external pipeline to form the solder blocking portion.

In some embodiments, the groove is in an annular shape, and a diameter of the groove gradually decreases along the flow direction of the solder.

In some embodiments, the pipeline connecting structure further includes a transition connecting pipe. The transition connecting pipe is sleeved on the connecting pipe body and welded and fixed with the connecting pipe body.

In some embodiments, the pipeline connecting structure further includes a transition connecting pipe. One end of the transition connecting pipe is connected with the connecting pipe body and the other end of the transition connecting pipe is connected with an external pipeline. The connecting pipe body is sleeved on the transition connecting pipe, and the connecting pipe body is provided with the solder blocking portion. The transition connecting pipe is provided with a switching blocking portion, the solder blocking portion and the switching blocking portion are capable of blocking the solder from flowing on the inner wall of the connecting pipe body, so as to limit the solder from flowing out from an end of the connecting pipe body away the transition connecting pipe.

In some embodiments, the solder blocking portion is formed by a part of the connecting pipe body protruding towards an axis of the connecting pipe body.

In some embodiments, the connecting pipe body includes a first connecting section, a second connecting section, and a first blocking section. The first connecting section is located at an end of the connecting pipe body proximal to the transition connecting pipe. The second connecting section is located at an end of the connecting pipe body away from the transition connecting pipe. The first blocking section is located between the first connecting section and the second connecting section, and two ends of the first blocking section are respectively connected with the first connecting section and the second connecting section. A diameter of the first connecting section is greater than a diameter of the second connecting section, and along an axis of the connecting pipe body, a diameter of the first blocking section gradually decreases from the first connecting section to the second connecting section. In some embodiments, the transition connecting pipe includes a guide inclined plane, and the guide inclined plane is arranged at an end of the transition connecting pipe away from the connecting pipe body.

In some embodiments, the switching blocking portion is formed by a part of the transition connecting pipe protruding towards an axis of the transition connecting pipe.

In some embodiments, the transition connecting pipe includes a first switching section, a second switching section, and a second blocking section. The first switching section is located at an end of the transition connecting pipe away from the connecting pipe body. The second switching section is located at an end of the transition connecting pipe proximal to the connecting pipe body. The second blocking section is located between the first switching section and the second switching section, and two ends of the second blocking section are respectively connected with the first switching section and the second switching section. A diameter of the first switching section is greater than a diameter of the second switching section, and along an axial direction of the transition connecting pipe, a diameter of the second blocking section gradually decreases from the first switching section to the second switching section.

In some embodiments, at least a part of the second switching section extends into the first connecting section and abuts against the first blocking section, and the second switching section and the first connecting section are connected with each other. The diameter of the first connecting section is equal to the diameter of the first switching section.

In some embodiments, the connecting pipe body is made of stainless-steel and the transition connecting pipe is made of copper.

The present invention further provides a stop valve, a stop valve includes a valve body and a pipeline connecting structure, the pipeline connecting structure is disposed on the valve body, and the valve body is capable of installing on a system pipeline through the pipeline connecting structure. The pipeline connecting structure is the above pipeline connecting structure.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic view of a pipeline connecting structure in an embodiment of the present invention.
FIG. 2 is a schematic view of a stop valve in an embodiment of the present invention.
FIG. 3 is an enlarged view of P part in FIG. 2.
FIG. 4 is a partial sectional view of a pipeline connecting structure in an embodiment of the present application.
FIG. 5 is a schematic view of a stop valve in an embodiment of the present invention.
FIG. 6 is a sectional view of a stop valve in an embodiment of the present application.

In the figures, 1000 represents a stop valve; 100 represents a pipeline connecting structure; 10 represents a connecting pipe body; 101 represents an inner wall; 111 represents a solder blocking portion; 111a represents a first solder blocking portion; 111b represents a second solder blocking portion; 112 represents a first connecting section; 113 represents a second connecting section; 114 represents a first blocking section; 12 represents a groove; 20 represents a transition connecting pipe; 121 represents a switching blocking portion; 122 represents a first switching section; 123 represents a second switching section; 124 represents a second blocking section; 125 represents a guide inclined plane; 30 represents an external pipeline; 200 represents a valve body; 201 represents a first opening; 202 represents a second opening; 300 represents a valve seat; and 400 represents a valve core.

### DETAILED DESCRIPTION

The technical solutions in the embodiments of this application will be clearly and completely described below with reference to the accompanying drawings in the embodiments of this application. It is obvious that the described embodiments are only a part of the embodiments, but not all of the embodiments. All other embodiments obtained by a person of ordinary skill in the art based on the embodiments of the present application without creative efforts shall fall within the protection scope of the present application.

It should be noted that when the component is referred to as being "mounted to" another component, it may be directly on the other component or may also be an intervening component. When one component is considered to be "disposed on" another component, it may be directly disposed on another component or there may be an intervening component simultaneously. When one component is considered to be "fixed to" another component, it may be directly fixed on another component or there may be an intervening component at the same time.

Unless otherwise defined, all technical and scientific terms used herein have the same meaning as commonly understood by one skilled in the art to which this application belongs. The terminology used herein in the specification of the present application is for the purpose of describing particular embodiments only and is not intended to be limiting of the present application. As used herein, the terms "or/and" include any and all combinations of one or more of the associated listed items.

A pipeline connecting structure 100 in present application can play a role in blocking a flow of a solder. The pipeline connecting structure 100 of the present application is specifically applied in a stop valve 1000, so that the stop valve 1000 is welded and fixed with an external pipeline 30 (such as an air conditioning pipeline) through the pipeline connecting structure 100. It can prevent the excessive solder from flowing through the pipeline connecting structure 100 and entering the stop valve 1000 during welding, thereby preventing internal welding flow. Of course, the pipeline connecting structure 100 in present application is not limited to the stop valve 1000. For those skilled in the art, the pipeline connecting structure 100 can be applied to solenoid valves or other system pipelines, as long as it can play the same role, which will not be described here.

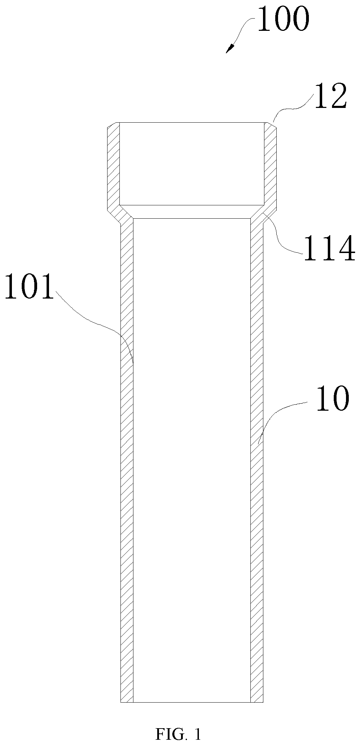

Referring to FIG. 1 to FIG. 3, in an embodiment, the present invention provides a pipeline connecting structure 100. The pipeline connecting structure 100 includes a connecting pipe body 10and a solder blocking portion 111 disposed on the connecting pipe body 10.

The solder blocking portion 111 in the present invention can block a solder (not shown) from flowing on an inner wall 101 of the connecting pipe body 10, so as to restrict the solder from flowing out from an end of the connecting pipe body 10along a flow direction of the solder. That is, the connecting pipe body 10 of this embodiment can play a role of preventing an internal flow welding. Therefore, when the connecting pipe body 10 is applied to the stop valve 1000, the solder can be prevented from infiltrating into the valve body 200. Furthermore, a normal assembly between other parts of the stop valve 1000 and the valve body 200 is ensured. And at the same time, a blocking phenomenon of the stop valve 1000 caused by falling off of welding chips is avoided. It should be noted that the above-mentioned internal flow welding specifically means that the solder flows on the inner wall 101 of the connecting pipe body 10 and flows out from an end of the connecting pipe body 10.

It can be understood that through the above structural arrangement, the solder can be multiple restricted by the connecting pipe body 10, which improves a barrier effect on the solder and further prevent an internal flow welding in the connecting pipe body 10.

In some embodiments, a plurality of the solder blocking portions 111 are arranged at intervals, so that a preset gap is defined between adjacent two of the solder blocking portions 111. In this way, the solder can be cooled as much as possible during a period from flowing through the previous solder blocking portion 111 to a next solder blocking portion 111, thus further improving a blocking effect of the solder by the connecting pipe body 10.

Specifically, in this embodiment, the solder blocking portion 111 includes a first solder blocking portion 111a and a second solder blocking portion 111b. The first solder blocking portion 111a is disposed on the inner wall of the connecting pipe body 10, and the second solder blocking portion 11 1b is disposed on an end of the connecting pipe body 10.

In this embodiment, the solder blocking portion 111 is formed by a part of the inner wall 101 of the connecting pipe body 10 protruding in a direction of a center line of the connecting pipe body 10. In this way, through arrangement of the solder blocking portion 111 on the connecting pipe body 10, the connecting pipe body 10 can use such protruding structure on the inner wall 101 of the connecting pipe body 10 to block the flow of the solder.

In some embodiments, along the flow direction of the solder, a part of the connecting pipe body 10 is bent inward to form a first blocking section 114, and a part of the inner wall 101 where the first blocking section 114 is located is regarded as the solder blocking portion 111. In other words, the connecting pipe body 10 of this embodiment can use the inner wall 101 where the first blocking section 114 is located as the solder blocking portion 111 to restrict the flow of the solder, so as to process and form the solder blocking portion 111 on the connecting pipe body 10, which has a simplified structure and facilitates a production and preparation of the connecting pipe body 10. Of course, it should be noted that the solder blocking portion 111 arranged on the inner wall 101 of the connecting pipe body 10 is not limited to illustration. For those skilled in the art, a protruding structure can also be directly arranged on the inner wall 101 of the connecting pipe body 10, which will not be described here.

Furthermore, a groove 12 is disposed on an outer edge of an end of the connecting pipe body 10 in a direction opposite to the flow direction of the solder, and when the connecting pipe body 10 is inserted into an external pipeline 30, the groove 12 of the connecting pipe body 10 is capable of fitting with the external pipeline 30 to form the solder blocking portion 111. In other words, in this embodiment, the groove 12 provided at the end of the connecting pipe body 10 can be used and regarded as the solder blocking portion 111 for restricting the flow of the solder. So that the connecting pipe body 10 can use the groove 12 to accommodate the solder flowing into the connecting pipe body 10 during operation, thereby achieving the purpose of blocking the solder from flowing.

It can be understood that the structural arrangement of the solder blocking portion 111 on the connecting pipe body 10 can be realized in the above manners, so that the connecting pipe body 10 can choose to provide with the groove 12 at the end of the connecting pipe body 10 as required, then the groove 12 cooperates with the external pipeline 30 to achieve the purpose of blocking the solder. Furthermore, a structural diversity of setting the solder blocking portion on the connecting pipe body 10 is increased.

In this embodiment, the groove 12 is in an annular shape, so as to meet the use requirements of welding and fixing with a welding ring during pipeline welding, and ensure that the groove 12 disposed at the end of the connecting pipe body 10 can play a role in blocking the solder.

Furthermore, along the flow direction of the solder, the diameter of the groove 12 gradually decreases, so as to facilitate the solder to enter the groove 12 of the connecting pipe body 10 and cooperate with the external pipeline 30 to realize a barrier to the solder, which has an effect of further improving the barrier of the groove 12 provided on the connecting pipe body 10 to the solder.

It can be understood that the number of the first blocking section 114 for blocking the solder in the pipeline connecting structure 100 of the present invention is at least one, and the number of the groove 12 for blocking the solder is one, which will not be described here. In other embodiments, the groove 12 for blocking the solder or the first blocking section 114 for blocking the solder may be separately provided on the pipeline connecting structure 100.

In this embodiment, the external pipeline 30 can be set as a transition connecting pipe 20, which is sleeved on the connecting pipe body 10 and welded and fixed with the connecting pipe body 10. The connecting pipe body 10 and the transition connecting pipe 20 cooperate with each other to form the solder blocking portion 111, which is used to block the solder when the transition connecting pipe 20 is welded with other pipelines.

In an air conditioning system, the stop valve is used to cut off and throttle the medium in the pipeline where it is located.

In a process of welding the stop valve and the air conditioning pipeline in the related art, when the solder used for welding melts and two pipelines are welded and fixed, excessive solder may flow along an inner wall of a pipeline and form internal flow welding, and even enter a valve cavity of the stop valve through the pipeline. In this way, it may not only affect the assembly of other parts in equipment, but also cause problems such as blockage caused by a fall of welding chips in subsequent use.

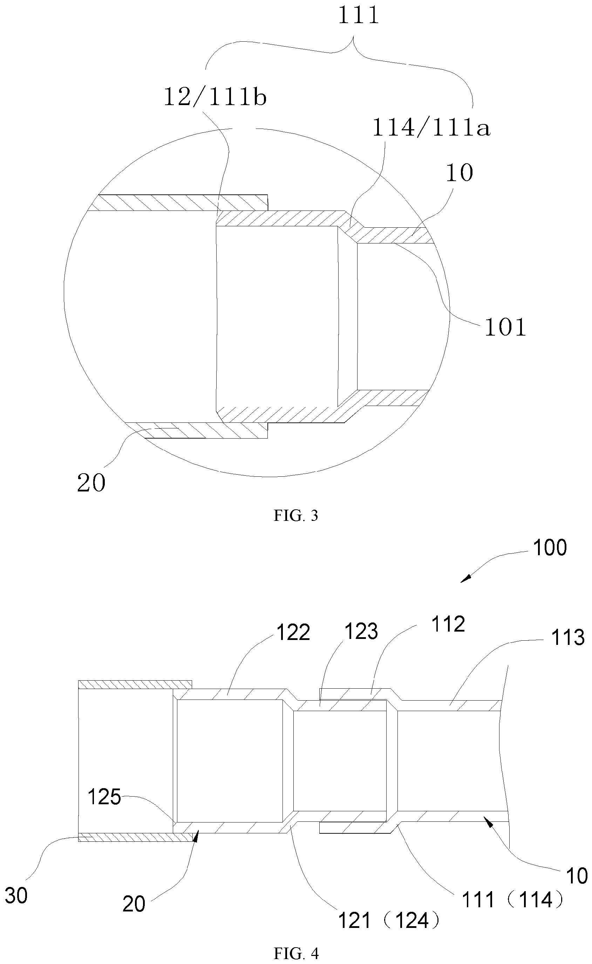

To solve the above problem, referring to FIG. 4, in some embodiments, the pipeline connecting structure 100 further includes a transition connecting pipe 20. One end of the transition connecting pipe 20 is connected with the connecting pipe body 10 and the other end of the transition connecting pipe 20 is connected with the external pipeline 30. The connecting pipe body 10 is sleeved on the transition connecting pipe 20, and the connecting pipe body 10 is provided with a solder blocking portion 111. The transition connecting pipe 20 is provided with a switching blocking portion 121, the solder blocking portion 111 and the switching blocking portion 121 can prevent the solder from flowing on an inner wall of the connecting pipe body 10, so as to limit the solder from flowing out from the end of the connecting pipe body 10 away from the transition connecting pipe 20. It can be understood that by providing the solder blocking portion and the switching blocking portion, the flow of the solder on the pipeline connecting structure 100 can be blocked.

Referring to FIG. 4, the solder blocking portion 111 is formed by a part of the connecting pipe body 10 protruding towards a central axis of the connecting pipe body 10, so as to realize the arrangement of the solder blocking portion 111 on the connecting pipe body 10. In this way, the structure is simple, and the processing is convenient, so that the connecting pipe body 10 can use such protruding structure on its inner wall to achieve the purpose of blocking the flow of the solder.

Furthermore, the connecting pipe body 10 includes a first connecting section 112, a second connecting section 113 and a first blocking section 114. The first connecting section 112 is located at an end of the connecting pipe body 10 proximal to the transition connecting pipe 20; The second connecting section 113 is located at the end of the connecting pipe body 10 away from the transition connecting pipe 20. The first blocking section 114 is located between the first connecting section 112 and the second connecting section 113. And both ends of the first blocking section 114 are respectively connected with the first connecting section 112 and the second connecting section 113.A diameter of the first connecting section 112 is greater than a diameter of the second connecting section 113. Along an axis of the connecting pipe body 10, a diameter of the first blocking section 114 gradually decreases from the first connecting section 112 to the second connecting section 113. In this way, it can play a role in blocking the flow of the solder and is convenient for processing.

Specifically, the first blocking section 114 is regarded as the solder blocking portion 111 that can block the flow of the solder, and a shape of the first blocking section 114 is substantially trumpet-shaped. In this way, the structure can be simplified and the first blocking section 114 can be processed conveniently. In addition, a connection between the connecting pipe body 10 and other components is facilitated by providing the first connecting section 112 and the second connecting section 113.

When one end of the pipeline connecting structure 100 is welded to the external pipeline 30, a part of the solder will flow out from the other end of the pipeline connecting structure 100 after the solder melts. Therefore, in order to prevent an outflow of the solder, the transition connecting pipe 20 is provided with a switching blocking portion 121. The switching blocking portion 121 can prevent the solder from flowing on an inner wall of the transition connecting pipe 20, and at the same time, the connecting pipe body 10 is provided with the solder blocking portion 111, the solder blocking portion 111 can block the flow of the solder on the inner wall of the connecting pipe body 10. Thus, with the cooperation of the switching blocking portion 121 and the solder blocking portion 111, the solder can be further prevented from flowing out from the end of the connecting pipe body 10 away from the transition connecting pipe 20.

In particular, while the solder flows from the switching blocking portion 121 of the transition connecting pipe 20 to the solder blocking portion 111 of the connecting pipe body 10, a path length of the solder flow is increased, so most of the solder will be cooled, which will further blocking the flow of the solder. That is, the pipeline connecting structure 100 is applied to the stop valve 1000, while welding between the pipeline connecting structure 100 and the external pipeline 30, a phenomenon that the solder flows into the valve cavity of the stop valve 1000 along the inner walls of the transition connecting pipe 20 and the connecting pipe body 10 can be avoided, thus improving a performance of the stop valve 1000.

Referring to FIG. 4, the switching blocking portion 121 is formed by a part of the transition connecting pipe 20 protruding towards an axis of the transition connecting pipe 20. Furthermore, by arrangement of the switching blocking port 121 on the transition connecting pipe 20, the switching blocking port 121 has a simple structure and is convenient to process. And when the transition connecting pipe 20 is in operation, it can use such protruding structure on its inner wall to achieve the purpose of blocking the flow of the solder.

Furthermore, the transition connecting pipe 20 includes a first switching section 122, a second switching section 123 and a second blocking section 124. The first switching section 122 is located at an end of the transition connecting pipe 20 away from the connecting pipe body 10. The second switching section 123 is located at an end of the transition connecting pipe 20 proximal to the connecting pipe body 10. The second blocking section 124 is located between the first switching section 122 and the second switching section 123. And both ends of the second blocking section 124 are respectively connected with the first switching section 122 and the second switching section 123. A diameter of the first switching section 122 is greater than a diameter of the second switching section 123. Along an axis of the transition connecting pipe 20, a diameter of the second blocking section 124 gradually decreases from the first switching section 122 to the second switching section 123. With this arrangement, the flow of the solder can be hindered and the transition connecting pipe 20 can be processed conveniently.

Specifically, the second blocking section 124 is regarded as the switching blocking portion 121 that can block the flow of the solder, and a shape of the second blocking section 124 is substantially trumpet-shaped. In this way, a structure can be simplified and it is convenient to process the second blocking section 124. In addition, by providing the first switching section 122 and the second switching section 123, it is convenient to connect the transition connecting pipe 20 with other components.

Referring to FIG. 4, the connecting pipe body 10 is sleeved outside the transition connecting pipe 20, the transition connecting pipe 20 extends into the connecting pipe body 10 and is restricted by and abuts against the solder blocking portion 111. A blocking space of the switching blocking portion 121 is greater than a blocking space of the solder blocking portion 111, which can accommodate more redundant the solder.

Referring to FIG. 4, at least a part of the second switching section 123 extends into the first connecting section 112 and abuts against the first blocking section 114. The first blocking section 114 can not only block the flow of the solder, but also limit a length of the second switching section 123 extending into the first connecting section 112, which is convenient for a rapid installation of the transition connecting pipe 20. And an interconnection of the second switching section 123 and the first connecting section 112 can improve a connecting strength between the transition connecting pipe 20 and the connecting pipe body 10, thus improving a structural stability of the pipeline connecting structure 100.

The diameter of the first connecting section 112 is equal to the diameter of the first switching section 122. It can be understood that if the transition connecting pipe 20 is not provided, the first connecting section 112 of the connecting pipe body 10 will be used to connect with the external pipeline 30. On the one hand, the switching blocking portion 121 of the transition connecting pipe 20 can block the solder to flow; on the other hand, the first switching section 122 on the transition connecting pipe 20 can be used for welding with the external pipeline 30 instead of the connecting pipe body 10. Therefore, the diameter of the first connecting section 112 is equal to the diameter of the first switching section 122, which can ensure a consistency of asize of the transition connecting pipe 20 and a size of the external pipeline 30, thus facilitating an installation of the transition connecting pipe 20 and the external pipeline 30.

Furthermore, the transition connecting pipe 20 includes a guide inclined plane 125, which is arranged at an end of the transition connecting pipe 20 away from the connecting pipe body 10. Specifically, the guide included plane 125 is located at a side of the transition connecting pipe 20 proximal to an axis of the transition connecting pipe 20, and the guide included plane 125 can play a role in improving guidance. It is convenient to guide the external pipeline 30 to be inserted into the transition connecting pipeline 20, so as to prevent the external pipeline 30 from colliding with the transition connecting pipeline 20 and being unable to be inserted smoothly, thereby improving the assembly efficiency of the external pipeline 30 and the transition connecting pipeline 20. Of course, in other embodiments, besides the guide inclined plane 125, the transition connecting pipe 20 can also be provided with other guiding structures, as long as the same effect can be achieved.

In some embodiments, the connecting pipe body 10 is made of stainless-steel, and the transition connecting pipe 20 is made of copper. The copper pipe is convenient to connect with the external pipeline 30 for welding, so as to meet the use requirements of the pipeline connecting structure 100 applied to the stop valve 1000. With such arrangement, a cost can be reduced.

In a technical field of refrigeration, copper pipes of the air conditioners are generally used as connecting pipes for connection. If the transition connecting pipe 20 is not provided, copper pipe group needs to be welded with the connecting pipe body 10 (the connecting pipe body 10 is made of stainless-steel), but the welding characteristics of copper material and stainless-steel material are quite different. Therefore, it is difficult to directly weld the copper pipe group with the stainless-steel pipe. Therefore, the transition connecting pipe 20 is made of red copper, and then the copper pipe group is directly welded with the red copper pipe, which makes the process simpler.

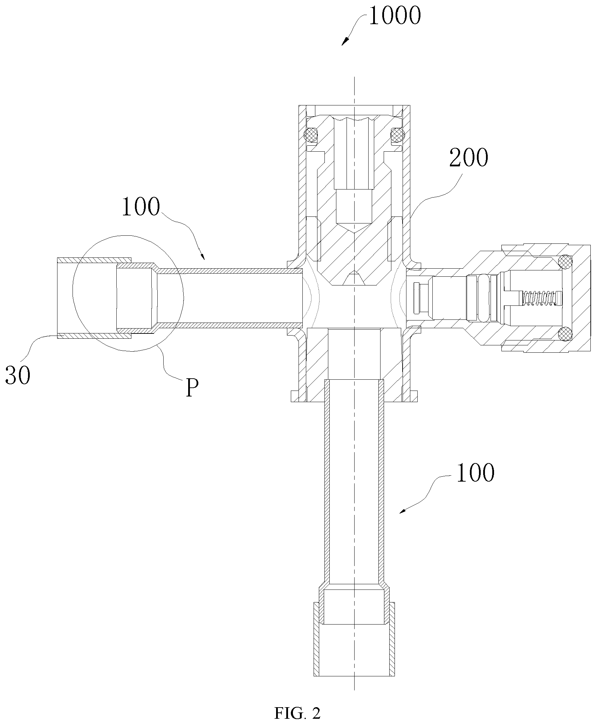

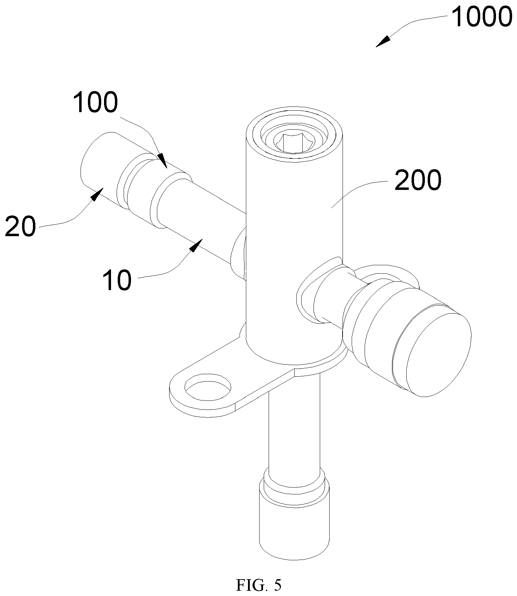

In addition, referring to FIG. 2, FIG. 5 and FIG. 6, the present application further provides a stop valve 1000. The stop valve 1000 includes a valve body 200 and a pipeline connecting structure 100. The pipeline connecting structure 100 is disposed on the valve body 200, and the valve body 200 is capable of installing on a system pipeline through the pipeline connecting structure 100. The pipeline connecting structure 100 is mentioned as above. In this way, the stop valve 1000 has a function of preventing the solder from infiltrating into the valve body 200, thus ensuring a normal assembly between other parts of the stop valve 1000 and the valve body 200, and at the same time avoiding the subsequent blockage of the stop valve 1000 caused by a falling off of welding chips.

In the present invention, the connecting pipe body 10 of the stop valve 1000 is provided with one first blocking section 114, and the groove 12 is disposed at the end of the connecting pipe body 10 connected with the transition connecting pipe 20. The first blocking section 114 forms the first solder blocking portion 111a, and the groove 12 forms the second solder blocking port 111b. It should be noted that, a distance *a* between the first solder blocking portion 111a and the second solder blocking portion 111b on the connecting pipe body 10 of the stop valve 1000 is greater than or equal to 0.5 mm and less than or equal to 5 mm, so that the solder can be cooled as much as possible before flowing through the groove 12 and flowing to the first blocking section 114.

When the pipeline connecting structure 100 provided by the present invention is applied to the stop valve 1000, the stop valve 1000 is welded and fixed with the external pipeline 30 through the pipeline connecting structure 100. It can prevent an excessive solder from flowing through the pipeline connecting structure 100 and entering a valve cavity of the stop valve 1000 in the welding process, thereby preventing internal welding flow, further ensuring the normal assembly between other parts of the stop valve 1000 and the valve body 200, and avoiding a subsequent blockage of the stop valve 1000 caused by the falling off of welding chips.

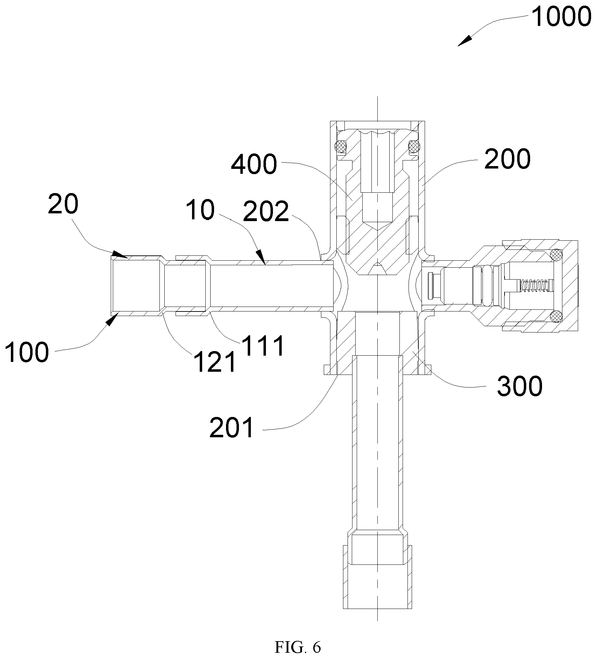

Referring to FIG. 6, the valve body 200 is provided with the first opening 201 and the second opening 202, and the first opening 201 is located at an end of the valve body 200. The second opening 202 is located at a peripheral side of the valve body 200, and two of the pipeline connecting structures 100 are inserted into the first opening 201 and the second opening 202, respectively, thereby realizing a communication between the valve cavity of the valve body 200 and the external pipeline 30. When the stop valve 1000 is turned on, a medium can flow into the valve body 200 from the first opening 201 and flow out through the second opening 202. Alternatively, the medium can flow from the second opening 202 into the valve body 200 and flow out through the first opening 201.

The stop valve 1000 further includes a valve seat 300 and a valve core 400. The valve seat 300 is installed in the valve body 200 through the first opening 201 and connected with the valve body 200. The valve core 400 is located in the valve body 200, and the valve core 400 can move in the valve body 200 to connect or disconnect the first opening 201 and the second opening 202. The valve seat 300 limits a movement of the valve core 400. When the stop valve 1000 is in a closed state, the valve core 400 abuts against the valve seat 300 and cooperates with the valve seat 300 to achieve sealing, thereby blocking a circulation of media between the first opening 201 and the second opening 202. When the stop valve 1000 is in an open state, the valve core 400 is not in contact with the valve seat 300, so that media can circulate between the first opening 201 and the second opening 202.

The pipeline connecting structure 100 provided by the present invention can block the flow of the solder, thereby playing a role in avoiding the solder flow inward and improving the performance of the stop valve 1000.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

One of ordinary skill in the art should recognize that the above embodiments are used only to illustrate the present invention and are not used to limit the present invention, and that appropriate variations and improvements to the above embodiments fall within the protection scope of the present invention so long as they are made without departing from the substantial spirit of the present invention.

## Claims

1. A pipeline connecting structure, **characterized by** comprising a connecting pipe body, wherein the connecting pipe body is provided with a solder blocking portion, the solder blocking portion is capable of blocking a solder from flowing on an inner wall of the connecting pipe body, to limit the solder from flowing out from an end of the connecting pipe body along a flow direction of the solder.

2. The pipeline connecting structure of claim 1, wherein the number of the solder blocking portions is multiple, and a plurality of solder blocking portions are arranged at intervals.

3. The pipeline connecting structure of claim 2, wherein the solder blocking portion comprises a first solder blocking portion and a second solder blocking portion, the first solder blocking portion is disposed on an inner wall of the connecting pipe body, the second solder blocking portion is disposed on an end of the connecting pipe body, a distance between the first solder blocking port and the second solder blocking port is defined as *a*, and the distance *a* between the first solder blocking portion and the second solder blocking portion satisfies following formula: 0.5 mm ≤*a* ≤5 mm .

4. The pipeline connecting structure of claims 1 or 2, wherein the solder blocking portion is defined by a part of the inner wall of the connecting pipe body protruding in a direction of a center line of the connecting pipe body; and/or,
a first blocking section is defined by a part of the connecting pipe body being bent inward along the flow direction of the solder, and the solder blocking portion is a part of the inner wall of the connecting pipe body where the first blocking section is located.

5. The pipeline connecting structure of claims 1 or 2, wherein a groove is defined on an outer edge of an end of the connecting pipe body in a direction opposite to the flow direction of the solder, and when the connecting pipe body is inserted into an external pipeline, the groove of the connecting pipe body is capable of fitting with the external pipeline to form the solder blocking portion.

6. The pipeline connecting structure of claim 5, wherein the groove is in an annular shape and a diameter of the groove gradually decreases along the flow direction of the solder.

7. The pipeline connecting structure of claim 5, further comprising a transition connecting pipe, wherein the transition connecting pipe is sleeved on the connecting pipe body and welded and fixed with the connecting pipe body.

8. The pipeline connecting structure of claim 1, further comprising a transition connecting pipe, wherein one end of the transition connecting pipe is connected with the connecting pipe body and the other end of the transition connecting pipe is connected with an external pipeline;
the connecting pipe body is sleeved on the transition connecting pipe, and the connecting pipe body is provided with the solder blocking portion; the transition connecting pipe is provided with a switching blocking portion, the solder blocking portion and the switching blocking portion are capable of blocking the solder from flowing on the inner wall of the connecting pipe body, so as to limit the solder from flowing out from an end of the connecting pipe body away the transition connecting pipe.

9. The pipeline connecting structure of claim 8, wherein the solder blocking portion is formed by a part of the connecting pipe body protruding towards an axis of the connecting pipe body.

10. The pipeline connecting structure of claims 8 or 9, wherein the connecting pipe body comprises:
a first connecting section, wherein the first connecting section is located at an end of the connecting pipe body proximal to the transition connecting pipe;
a second connecting section, wherein the second connecting section is located at an end of the connecting pipe body away from the transition connecting pipe; and
a first blocking section, wherein the first blocking section is located between the first connecting section and the second connecting section, and two ends of the first blocking section are respectively connected with the first connecting section and the second connecting section,
wherein a diameter of the first connecting section is greater than a diameter of the second connecting section, and along an axis of the connecting pipe body, a diameter of the first blocking section gradually decreases from the first connecting section to the second connecting section; and/or,
the transition connecting pipe comprises a guide inclined plane, and the guide inclined plane is arranged at an end of the transition connecting pipe away from the connecting pipe body.

11. The pipeline connecting structure of claim 10, wherein the switching blocking portion is formed by a part of the transition connecting pipe protruding towards an axis of the transition connecting pipe.

12. The pipeline connecting structure of claim 11, wherein the transition connecting pipe comprises:
a first switching section, wherein the first switching section is located at an end of the transition connecting pipe away from the connecting pipe body;
a second switching section, wherein the second switching section is located at an end of the transition connecting pipe proximal to the connecting pipe body; and
a second blocking section, wherein the second blocking section is located between the first switching section and the second switching section, and two ends of the second blocking section are respectively connected with the first switching section and the second switching section;
wherein a diameter of the first switching section is greater than a diameter of the second switching section, and along an axial direction of the transition connecting pipe, a diameter of the second blocking section gradually decreases from the first switching section to the second switching section.

13. The pipeline connecting structure of claim 12, wherein at least a part of the second switching section extends into the first connecting section and abuts against the first blocking section, and the second switching section and the first connecting section are connected with each other;
the diameter of the first connecting section is equal to the diameter of the first switching section.

14. The pipeline connecting structure of claims 7 or 8, wherein the connecting pipe body is made of stainless-steel and the transition connecting pipe is made of copper.

15. A stop valve, comprising a valve body and a pipeline connecting structure, wherein the pipeline connecting structure is disposed on the valve body, and the valve body is capable of installing on a system pipeline through the pipeline connecting structure; **characterized in that**, the pipeline connecting structure is the pipeline connecting structure of any one of claims 1 to 14.
